# EUROPEAN PATENT APPLICATION

(11) **EP 1 201 696 A1**
(43) Date of publication of application: **02.05.2002**
(21) Application number: 00122982.2
(22) Date of filing: 23.10.2000
(51) Int. Cl.: C08G 18/76, C08L 97/02, C08G 18/48

(54) **The use of polyisocyanate compositions as a binder for composite lignocellulosic materials**

(71) Applicant: HUNTSMAN INTERNATIONAL LLC, Salt Lake City, Utah 84108 (US)
(72) Inventor: The designation of the inventor has not yet been filed
(74) Representative: Moens, Marnix Karel Christiane

(57) **Abstract**

A polyisocyanate composition used for binding lignocellulosic materials comprising a polyisocyanate prepolymer said prepolymer being the reaction product from a polyisocyanate and a polyol characterised in that the polyisocyanate composition has a free unreacted diisocyanate content of at least 8% by weight

## Description

### Field of the invention

This invention relates to the use of polyisocyanate compositions useful as binder for the preparation of composite lignocellulosic materials particularly composites containing lignocellulosic strands such as orientated strand board. The polyisocyanate compositions of the invention comprise a specific polyisocyanate prepolymer optionally blended into a base polyisocyanate.

### Background of the invention

The use of organic polyisocyanates as binders for lignocellulosic material in the manufacture of sheets or moulded bodies such as waferboard, chipboard, fibreboard and plywood is well known and is commercially desirable because the resulting composites have high adhesive and cohesive strength, flexibility to changes in wood species, versatility with respect to cure temperature and rate, excellent structural properties of the resulting composites and the ability to bond with lignocellulosic materials having high water content than typically used for condensation resins such as phenol formaldehyde.

However, processing difficulties are encountered with the use of standard isocyanate binders at high furnish moisture contents which can negatively impact composite processing. One method used to minimize these difficulties is to use only lignocellulosic materials which have a low moisture content (i.e., a moisture content of from about 3 to about 8%). This low moisture content is generally achieved by drying the cellulosic raw material to reduce the moisture content. Such drying is, however, expensive and has a significant effect upon the economics of the process. Use of materials having low moisture contents is also disadvantageous because panels of the product composite material tend to absorb moisture and swell when used in humid environments.

Accordingly, there is a clear need to provide polyisocyanate binder compositions which have the ability to utilise lignocellulosic feedstock at higher moisture contents thereby significantly reducing the total energy requirement for drying within the manufacturing facility. At the same time, these polyisocyanate binder compositions should be able to provide for composites with superior dimensional stability as the product leaves the pressing operation and thus suffering less shrinkage / re-equilibration. The polyisocyanate binder compositions should also provide a higher mat tackiness, thereby ensuring a better mat stability before the pressing operation

A further difficulty experienced when pressing the composite panels using a conventional polymeric diphenylmethane diisocyanate (pMDI) is that lower homologues in the pMDI can be emitted from the press in the excess steam in the decompress step during processing. Accordingly, there is a further need to be able to operate at lower pressures and reduced pressing cycles. The lower pressure temperature results in lower emissions at the decompression step due the generation of significantly less gas pressure within the composite due to lower levels of steam generated during pressing at the reduced temperatures or press cycles. The reduction in pressing cycles ensures that production capacities of existing plants can be increased without the extensive capital requirements of a new facility.

The reduced press pressure requirements through operation of a composite processing facility at higher furnish moisture contents will result in lower power requirements and, potentially for those wishing to invest in new assets, reduced requirement for pressure throughout the length of the press significantly reducing capital expenditure. The reduced requirement for hydraulic pressure to achieve target thickness allows production of lignocellulosic composites at higher densities without the need for modification of the current pressing equipment. In addition, the lower pressure temperatures and cycle times result in a product with significantly less surface degradation or charring from the use of external release agents and therefore superior appearance thus requiring less post-press processing such as touch-sanding.

Isocyanate prepolymers are among the isocyanate materials which have been used in binder compositions to solve various processing problems. U.S. Pat. No. 4,100,328, for example, discloses isocyanate-terminated prepolymers which improve product release from a mold. U.S.

Pat. No. 4,609,513 also discloses a binder which is an isocyanate-terminated prepolymer to improve product release. U.S. Pat. No. 5,179,143 discloses a binder composition in which a particular type of isocyanate prepolymer is used to improve adhesiveness at room temperature

All the above objectives and benefits have now been met by the polyisocyanate compositions of the present invention. This invention relates to the use of polyisocyanate compositions useful as binder for the preparation of composite lignocellulosic materials particularly composites containing lignocellulosic strands such as orientated strand board. The polyisocyanate compositions of the invention comprise a specific polyisocyanate prepolymer optionally blended.

The polyisocyanate compositions of the present invention yield a material that can be tuned to provide the processing / final composite property benefits required by the customer. The polyisocyanate prepolymer is prepared through the use of hydroxyl-containing systems to introduce prepolymer linkages that enhance the utility of the final polyisocyanate composition towards the binding of a lignocellulosic material. The composition of the present invention thus enable the production of wood composites at press cycles significantly lower than those possible even with catalysed isocyanate binders, at lower press temperatures and pressures and at higher moisture contents of the input lignocellulosic material than would ever be possible during the traditional processing of lignocellulosic composites. It has also been found that the polyisocyanate compositions of the present invention provide enhanced release performance relative to standard polyisocyanates currently used to bind lignocellulosic material. This enhanced performance is characterised by the use of significantly lower levels of external release agents, such as waxes or soaps, to achieve the same release performance as the standard polyisocyanate systems used in combination with much higher loading of the same external release agents. All the above makes it clear that the compositions according to the present invention provide a number of significant advantages for the producer of lignocellulosic based composites.

### Detailed description of the present invention

The polyisocyanate composition of the present invention used for binding lignocellulosic material may comprise a polyisocyanate prepolymer said prepolymer being the reaction product from a polyisocyanate and a polyol characterised in that the polyisocyanate composition has a free unreacted diisocyanate content of at least 8% by weight. Preferably at least 60%, more preferably 70 to 86 % of the free unreacted diisocyanate content is 4,4' diphenylrnethane diisocyanate.

Preferably the polyisocyanate binder composition has a free NCO value of 15 to about 30% by weight and more preferably from 20 to 30% by weight. As described herein, it is comprised of an isocyanate-terminated prepolymer. This prepolymer is the reaction product of an excess of an organic polyisocyanate and a polyol.

The organic polyisocyanate which is used for making the prepolymer of the present invention is preferably diphenylmethane diisocyanate (MDI), for example, the 4,4'-MDI, 2,4'-MDI, polymeric MDI, MDI variants and mixtures thereof.

The most preferred MDI for making the prepolymer is the 4,4'- MDI or a mixture of 4,4'-MDI and 2, 4'-MDI, wherein the mixture comprises at least 50% of 4,4'-MDI, preferably in an amount greater than about 75% by weight and more preferably greater than about 90% by weight and most preferably greater than about 95% by weight. In addition, "polymeric MDI" may added. By "polymeric MDI", it is meant the polymethylene polyphenylene polyisocyanates which are comprised in the polyisocyanate compositions and which have a functionality of at least 2.5. The polymeric MDI are commercially available and are manufactured by the phosgenation of polyamine mixtures obtained from the condensation of aniline and formaldehyde in appropriate proportions. For the purpose of this invention, polymeric MDI's having functionality in this range 2.5-3.5 and preferably 2.5-3.1 are particularly suitable.

The polyol used for preparing the have from 2 to 8 hydroxyl groups. Preferred polyols are polyether polyols. The term "polyether polyol" can in turn represent mixtures of different such alkoxylation products. Preferred polyol include those in which polymerized propylene oxide units and/or polymerized ethylene oxide units are present. These units may be arranged in statistical distribution, in the form of polyethylene oxide blocks within the chains, and/or terminally.

Highly preferred polyether polyols useful for preparing the isocyanate terminated prepolymer contain at least about 15% by weight ethylene oxide groups, and more preferably between 50% to 100 % by weight ethylene oxide groups. The polyether polyols have an average nominal functionality of 2-6, and preferably 2-4. They have a number average equivalent weight of about 700 to about 5,000, and a preferred equivalent weight ranging from about 1000 to about 4,000, and more preferably ranging from about 1200 to about 3500 and most preferably ranging from about 1500 to about 3000.

The polyether polyols which are to be used for preparing the isocyanate-terminated prepolymer include the products obtained by the polymerization of ethylene oxide with another cyclic oxide, for example, propylene oxide in the presence of polyfunctional initiators; however, the product must maintain the requirements described hereinabove. Suitable initiator compounds contain a plurality of active hydrogen atoms and include water and low molecular weight polyols, for example, ethylene glycol, propylene glycol, diethylene glycol, dipropylene glycol, cyclohexane dimethanol, resorcinol, bisphenol A, glycerol, trimethylolopropane, 1,2,6-hexantriol, pentaerythritol and the like. Mixtures of initiators and/or cyclic oxide may be used.

Especially useful polyether polyols include poly(oxyethylene oxypropylene) diols and/or triols obtained by the sequential addition of propylene and ethylene oxides to di-or trifunctional initiators, as fully described in the prior art. Mixtures of said diols and triols are also useful, most prefered are diols

The isocyanate-terminated prepolymer is prepared by the reaction of an excess amount of the polyisocyanate with the polyether polyol. The amounts of polyisocyanate and polyether polyol utilized are those known to be effective to obtain a prepolymer having the indicated NCO value utilizing techniques known in the art. For example, the prepolymer may be prepared by reacting the organic polyisocyanate with the polyether polyol followed by dilution with modified polyisocyanate, as defined herein, if present. Alternatively, modified polyisocyanate may be mixed with the unmodified polyisocyanate prior to reaction with the polyol. Such reaction is allowed to take place at effective temperatures to form the prepolymer, such as from about 40.deg. C. to about 100. deg. C., and in general, the use of a catalyst, is optional. The relative amounts of organic polyisocyanate and polyol depend on the desired NCO value of the prepolymer, the NCO value of the polyisocyanate and the OH value of the polyol and can be easily calculated by those skilled in the art.

At least 90% of the groups obtained from the reaction of the polyisocyanate and the polyether polyol in preparing the prepolymer are urethane groups. To the prepolymers so prepared, a polyisocyanate or a variant thereof may be added provided the NCO value remains in the indicated range described hereinabove. The base polyisocyanate or variant may be selected from those mentioned above. Aromatic polyisocyanates and, in particular, MDI based polyisocyanates are preferred. It is even more preferred that a modified polyisocyanate be added, and it is even more preferred that the base polyisocyanate be the variant of the MDI utilized in reacting with the polyol.

### The base polyisocyanate

The polyisocyanates for use as the base polyisocyanate may be any organic polyisocyanate compound or mixture of organic polyisocyanate compounds, provided said compounds have at least 2 isocyanate groups. Organic polyisocyanates include diisocyanates, particularly aromatic diisocyanates, and isocyanates of higher functionality. Examples of organic polyisocyanates which may be used in the composition of the present invention include aliphatic isocyanates such as hexamethylene diisocyanate; and aromatic isocyanates such as m- and p-phenylene diisocyanate, tolylene-2,4- and tolylene-2,6-diisocyanate, diphenyl- methane-4,4'-diisocyanate, chlorophenylene-2,4-diisocyanate, naphthylene- 1,5-diisocyanate, diphenylene-4,4'-diisocyanate, 4,4'-diisocyanate- 3,3'-dimethyl-diphenyl, 3-methyldiphenylmethane-4,4'-diisocyanate and diphenyl ether diisocyanate; and cycloaliphatic diisocyanates such as cyclohexane-2,4- and -2,3-diisocyanate, 1-methylcyclohexyl-2,4- and -2,6-diisocyanate and mixtures thereof and bis-(isocyanatocyclohexyl)methane and triisocyanates such as 2,4,6-triisocyanatotoluene and 2,4,4-triisocyanatodiphenylether. Modified polyisocyanates containing isocyanurate, carbodiimide or uretonimine groups may be employed as well. Further blocked polyisocyanates, like the reaction product of a phenol or an oxime and a polyisocyanate, may be used, having a deblocking temperature below the temperature applied when using the polyisocyanate composition. Mixtures of isocyanates may be used, for example a mixture of tolylene diisocyanate isomers such as the commercially available mixtures of 2,4- and 2,6-isomers and also the mixture of di- and higher polyisocyanates produced by phosgenation of aniline/formaldehyde condensates. Such mixtures are well-known in the art and include the crude phosgenation products containing methylene bridged polyphenyl polyisocyanates, including diisocyanate, triisocyanate and higher polyisocyanates together with any phosgenation by-products. Preferred isocyanates to be used in the present invention are those wherein the isocyanate is an aromatic diisocyanate or polyisocyanate of higher functionality such as a pure diphenylmethane diisocyanate or a mixture of methylene bridged polyphenyl polyisocyanates containing diisocyanates, triisocyanates and higher functionality polyisocyanates. Methylene bridged polyphenyl polyisocyanates are well known in the art. They are prepared by phosgenation of corresponding mixtures of polyamines obtained by condensation of aniline and formaldehyde. For convenience, polymeric mixtures of methylene bridged polyphenyl polyisocyanates containing diisocyanate, triisocyanate and higher functionality polyisocyanates are referred to hereinafter as polymeric MDI. Suitable polyisocyanates include SUPRASEC™ DNR, SUPRASEC™ 2185, RUBINATE™ M and RUBINATE™ 1840, all avilable from Huntsman Polyurethanes. Preferably the polyisocyanate is liquid at room temperature. The polyisocyanate mixture may be produced in accordance with any of the techniques known in the art. The isomer content of the diphenyl-methane diisocyanate may be brought within the required ranges, if necessary, by techniques which are well known in the art.

In order to further improve either the storage stability of the polyisocyanate composition of the present invention or the cost effectiveness of the present invention a diluent may be added to the composition. Suitable diluents include plasticizers of the type mentioned in "*Taschenbuch der Kunststoff-Additive*", Ed. by R. Gachter and H. Muller, Carl Hanser Verlag Munchen, third edition, 1989. Preferred diluents are phthalates, aliphatic carboxylates, fatty acid esters, linseed oil, soybean oil and propylene carbonate.These diluents are added in amounts of from 1 to 40 parts by weight per 100 parts by weight of polyisocyanate and preferably in amounts of from 1 to 15 parts by weight per 100 parts by weight of polyisocyanate. The composition further may comprise conventional additives like flame retardants, lignocellulosic preserving agents, fungicides, waxes, sizing agents, fillers, surfactants, thixotropic agents and other binders like formaldehyde condensate adhesive resins and lignin (optionally in combination with a lignin solvent such as described in PCT Patent Application No. EP96/00924). A particularly preferred additive to be used in the polyisocyanate composition of the present invention is a coupling agent such as an organofunctional silane (for example, Dynasylan AMEO, available from Huls. Adding such a coupling agent to the polyisocyanate composition leads to improved board properties. The organofunctional silane coupling agents are used in amounts ranging from 0.01 to 3 %, preferably from 0.1 to 2 % by weight based on the polyisocyanate. The polyisocyanate composition of the present invention can be made by simply mixing the ingredients at room temperature prior to application of the polyisocyanate to the lignocellulosic

A specific prepolymer based on a defined isomer mixture according to the present invention is first prepared by introducing a hydroxyl containing material to introduce prepolymer-type linkages. This is conducted with efficient mixing and with or without the application of heat depending on the nature of the materials and usually is performed in an inert atmosphere (nitrogen or dry air). The final polyisocyanate system for use as the lignocellulosic binder is then prepared by introduction of the required amount of the prepolymer, as defined by the invention, into another polyisocyanate as defined by the invention. This can be achieved with or without the use of 'in line' mixing equipment or any other technique known to someone skilled in the art. The final polyisocyanate composition is then applied to the lignocellulosic material with or without the addition of diluent materials / or the application of heat to reduce the viscosity of the material prior to application. The material is then cured to the final composite material through the application of pressure and temperature for a defined period of time.

### Description of Lignocellulosic material

Lignocellulosic materials which may be bonded with the polyisocyanate prepolymer of the invention include: wood, woodbark, cork, bagasse straw, flax, bamboo, esparto, rice husks, sisal fibers, coconut fibers, wood chips, wood fibers, wood shavings, wood dust, wood flour, kenaf, nut shells, hulls from cereal grains such as rice and oats. Wood, straw and bagasse are particularly preferred. Any mixture of the previously described materials may be used to form a composite with an polyisocyanate of the invention. Additionally, there may be mixed with the lignocellulosic materials other particulate or fibrous materials such as ground foam waste (for example, ground polyurethane foam waste), mineral fillers, glass fibre, mica, rubber, textile waste such as plastic fibres and fabrics. These materials may be used in the form of granulates, shavings or chips, fibers, strands, spheres or powder. These materials may have a moisture content of from 2% to 50%, preferably from about 5% to 20% and most preferably from 8% to 20%. When the polyisocyanate composition of the invention is applied to the lignocellulosic material, the weight ratio of polyisocyanate/lignocellulosic material will vary depending on the bulk density of the lignocellulosic material employed. Therefore, the polyisocyanate compositions may be applied in such amounts to give a weight ratio of polyisocyanate/lignocellulosic material in the range of 0.1: 99.9 to 20: 80 and preferably in the range of 0.5 : 99.5 to 10 : 90 and most preferably in the range 3:97 to 8:92. If desired, other conventional binding agents, such as formaldehyde condensate adhesive resins, may be used in conjunction with the polyisocyanate composition of the invention.

The composition of the present invention my further comprise conventional additives like release agents such as waxes, catalysts, flame retardants, lignocellulosic preserving agents, fillers, surfactants

### Description of the Process for Preparation of Lignocellulosic Composites

### 1. Preparation of lignocellulosic

In the process of the present invention the prepared lignocellulosic material is first dried to the required moisture content. As the moisture content required using a aromatic polyisocyanate of the invention is significantly higher, significantly less time residence time is required in any drying apparatus, thus leading to significant increases in the capacity of the drying facility in a composite manufacturing facility. In addition, the higher moisture content tolerated by the polyisocyanates of the invention means that VOC emission from the dryers of a typical manufacturing facility are significantly reduced.

### 2. Application of the polyisocyanate binder composition to the lignocellulosic

In the process of the present invention, the polyisocyanate binder composition is added to the lignocellulosic material to be bonded in a quantity of from 1 to about 20% by weight, based on the total weight of binder plus lignocellulosic material, preferably from 2 to about 10% by weight.

### 3. Formation of the pre-mats/pre-shape

The resultant mixture of lignocellulosic and polyisocyanate can then be formed into 'pre-mats' for panel manufacture or any other required shape. The use of a polyisocyanate of the invention can be used to increase the amount of 'tack' thus allowing more efficient production of the final articles due to improvement in consistency in mat / shape integrity prior to pressing. Thus results in less wastage due to poor lignocelluosic distribution.

### 4. Pressing the pre-mat / pre-shape

The pre-mat / pre shape may then be compressed to form panels or three dimensional, shaped, molded articles under heat and pressure. Suitable temperatures for the compression process are generally in the range of from about 70 to about 250 deg. C., preferably from about 130 to about 205 deg. C., and most preferably from 140 to 180 deg. C. Pressures used in compression processes to achieve the required product dimensions range from about 50 to about 300 bar, significantly lower than required for normal composite manufacture. Compression times will, of course, be dependent upon the thickness of the product being produced. As a result of using an polyisocyanate composition of the invention it is found that there is no requirement for the use of a steam injection processes, even for composites with thickness of more than 25mm. Multilayered boards or molded parts may be produced in an analogous manner from veneers, paper or woven fabrics by treating the layers with the binder as described above and subsequently pressing them, generally at elevated temperature and pressure. Temperatures experienced directly by the surface of the composite from 100 to about 240 deg. C. are generally preferred in such processes, with temperatures of from about 140 to 220 deg. C. being most preferred. Temperatures experienced by the core of the composite, to ensure the production of composites with desired dimensional stability and physical performance, when using a polyisocyanate composition of the invention may be from 70 to about 140 deg. C, with temperatures of 80 to 130 deg. C being preferred and with temperatures of 85 to 120 deg C being most preferred. The initial compression pressure is preferably in the range of from about 50 to 300 bar, with the initial compression pressure being most preferably in the range form 50 to 200 bar. In addition, the polyisocyanate compositions of the present invention are extremely effective in minimising unwanted adhesion to caul plates, press plates, embossed press plates and other surfaces with which the treated lignocellulosic material may come into contact when used in combination with external release systems.

### 5. Post pressing / Final Product

The composite wood products produced with the binder of the present invention are characterized by an excellent appearance due to the significantly lower pressing temperature coupled with reduced cycle times which result in significantly reduced surface degradation or charring of external release agents. In addition, excellent internal bond properties, good dimensional stability and excellent exterior durability of the resulting materials are obtained and they may thus be used in any of the situations where such articles are customarily used.

More detailed descriptions of methods of manufacturing products based on lignocellulosic material are available in the prior art. The techniques and equipment conventionally used can be adapted for use with the polyisocyanate compositions of the present invention.

The invention is illustrated but not limited by the following examples:

### Example 1

A prepolymer was prepared by reacting 83.7 pbw of Suprasec DNR (standard polymeric MDI) with 16.3 pbw of Volpo G26, a glycerol initiated polyether polyol, prepolymerized with 100% ethylene oxide (EO) until a MW of 1200 (OH-value= 140 mg KOH/g) was reached. The reaction time was 1.5 hrs in an oven at 85°C with air circulation. The resulting product had a measured NCO content of 24% and contained 23.1% free unreacted MDI of which 93.9% was 4,4'- MDI. The prepolymer was then sprayed in a rotating drum blender onto pine wood flakes containing 25% H₂O (on dry weight). The concentration of the binder was 6% on dry wood. After mat formation, an OSB panel was pressed with dimensions of 400mm x 400mm x 14mm and to a density of 650 kg/m³. The temperature of the press platens was 150°C and the press factor was 11 s/mm, with a compression and degassing step of 20 s. The panel had a dry internal bond strength (V20-IB) of 673 kPa and a swell after 24 hrs of 9.1%.

| | |
|---|---|
| Prepolymer NCO-content (%) | 24 |
| Polyol type | Glycerol + EO |
| MW | 1200 |
| Binder concentration (%) | 6 |
| Panel density (kg/m³) | 650 |
| Panel thickness (mm) | 14 |
| Wood moisture content (%) | 25 |
| Press temperature (°C) | 150 |
| Press factor (s/mm) | 11 |
| Internal bond strength V20-IB (kPa) | 673 |
| Swell after 24 hrs (%) | 9.1 |

### Example 2

The same binder as described in example 1 was used in similar conditions, but at a press platen temperature of 100°C and a higher press factor 17 s/mm. Dry internal bond strength was 412 kPa, swell after 24 hrs was 10%.

### Example 3

A prepolymer was prepared, using the same procedure as example 1 using and standard polymeric MDI and PEG 600, a glycerol initiated polyether polyol, prepolymerized with 100% ethylene oxide (EO) until a MW of 600 (OH-value= 140 mg KOH/g) was reached. The reaction time was 1.5 hrs in an oven at 85°C with air circulation. The resulting product had a measured NCO content of 28% and contained 32.8% free unreacted MDI of which 94.2% was 4,4'- MDI. Mats of OSB wood flakes, coated with this product as in example 1, could be processed at a press temperature of 130°C, a press factor of 17 s/mm and a moisture content of 25%.

### Example 4

A prepolymer was prepared, using the same procedure as example 1 using and standard polymeric MDI and PEG 600, a glycerol initiated polyether polyol, prepolymerized with 100% ethylene oxide (EO) until a MW of 600 (OH-value= 140 mg KOH/g) was reached. The reaction time was 1.5 hrs in an oven at 85°C with air circulation. The resulting product had a measured NCO content of 22% and contained 15.2% free unreacted MDI of which 94.1% was 4,4'- MDI. Mats of OSB wood flakes, coated with this product as in example 1, could be processed at a press temperature of 130°C, a press factor of 17 s/mm and a moisture content of 25%.

### Example 5

A prepolymer with PEG 600 and standard polymeric MDI was prepared as in example 1. The resulting product had a measured NCO content of 20% and contained 10% free unreacted MDI of which 93.5% was 4,4'- MDI. An OSB panel could be prepared with flakes containing 25% moisture, sprayed with 6% binder concentration, at a press platen temperature of 190°C and with a press factor of 5.3 s/mm.

| | |
|---|---|
| Prepolymer NCO-content (%) | 20 |
| Polyol type | Glycol + EO |
| MW | 600 |
| Binder concentration (%) | 6 |
| Panel density (kg/m3) | 550 |
| Panel thickness (mm) | 14 |
| Wood moisture content (%) | 25 |
| Press temperature (°C) | 190 |
| Minimum press factor (s/mm) | 5.3 |
| Internal bond strength V20-IB (kPa) | 494 |
| Swell after 24 hrs (%) | 8.4 |

### Example 6

A prepolymer of 8% NCO was prepared with the 4,4' isomer of monomeric MDI and the polyether polyol Arcol 2580. The latter is an EO/PO glycerol with 75% EO randomly distributed, having a MW of 4007. This prepolymer was then blended with Suprasec DNR to achieve a material with an NCO-level of 25%. This product contained 32.8% free unreacted MDI of which 94.5% was 4,4'- MDI. This product was sprayed onto wood flakes and processed in the same way as in example 5, except with a lower moisture content of 18%. The same minimum press factor was achieved as in the former example: 5.3s/mm

| | |
|---|---|
| Prepolymer NCO-content (%) | 25 |
| Polyol type | Glycerol + EO/PO (75/25) |
| MW | 4007 |
| Binder concentration (%) | 6 |
| Panel density (kg/m3) | 615 |
| Panel thickness (mm) | 14 |
| Wood moisture content (%) | 18 |
| Press temperature (°C) | 190 |
| Minimum press factor (s/mm) | 5.3 |
| Internal bond strength V20-IB (kPa) | 561 |
| Swell after 24 hrs (%) | 7.8 |

### Example 7

A comparison was made between the prepolymer described in example 6 (=PP1) and a standard polymeric MDI outside the scope of the invention but typically used in the production of composite panels(=PP2),. The respective binders were sprayed in a 6% concentration on wood and panels were produced of 400mm x 400mm x 14mm, with density of 650 kg/m3. Press factors were recorded before delamination, at a temperature of 100 deg C for the prepolymer system (PP1) and a press temperature of 190 deg C for the standard MDI (PP2). Using the prepolymer of the invention based on 75% EO (PP1) it was possible to prepare composites at similar press factors but at temperatures that were 90 deg C lower than those required by the standard MDI.

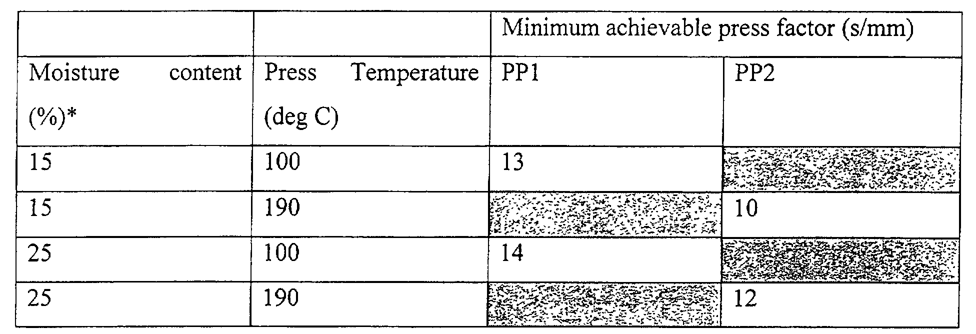

Recordings were also made of the maximum hydraulic pressure generated by the Siempelkamp laboratory press to press the mats (400mm x 400mm x ± 150mm) to the target thickness of 14 mm when using binder PP1. At the higher mat moisture contents (25%), the required press energy is reduced by ± 100% compared to the lower mat moisture contents (15%)..

| MC (%)* | Press temp (°C) | Max. hydraulic pressure (bar) |
|---|---|---|
| 15 | 100 | 130 |
| 25 | 100 | 65 |

| | | |
|---|---|---|
| *Calculated on dry wood. Measured values on the blend represent 12% and 19% respectively. | | |

The results show the significant effect of being able to process panels at higher moisture content on the requirement for hydraulic pressure to achieve final mat thickness. The maximum core temperature achieved in the panel was also recorded at the end of the press cycle during the preparation of panels with the composition of the invention. The recordings were made with a temperature probe linked to the ATR software of the Siempelkamp press. The panels made with the press platens at 100°C achieve maximum 90°C in the core just before decompression.

| MC (%)* | Press temp (°C) | Max. core temperature (°C° |
|---|---|---|
| 15 | 100 | 90 |
| 25 | 100 | 90 |

| | | |
|---|---|---|
| *Calculated on dry wood. Measured values on the blend represent 12% and 19% respectively. | | |

The results show that the composition of the invention allows the preparation of composites where the internal temperature does not reach 100 deg C. This is surprising to anyone skilled in the art of composite preparation where a maximum core temperature prior to decompression over 100 deg C is assumed to be necessary to ensure production of composites with suitable performance.

### Example 8

A prepolymer was prepared and processed according to the conditions in example 5. A 15% aqueous solution of potassium oleate was applied on the steel press platens in a concentration of 4 g/m². The quality of the release performance after pressing was rated on a scale from 0 to 5, the latter representing no sticking to the platens at all. Seven consecutive panels were made with a rating 5, after which the experiment was stopped.

| Sample | Bottom plate | Top plate |
|---|---|---|
| No. of repeats | | |
| 1 | 5 | 5 |
| 2 | 5 | 5 |
| 3 | 5 | 5 |
| 4 | 5 | 5 |
| 5 | 5 | 5 |
| 6 | 5 | 5 |
| 7 | 5 | 5 |

The release rating is given a value from 1 to 5 having the following significance:
1 complete sticking, board can not be removed without destruction of the board
2 sticking with wood failure higher than 50 %
3 sticking with wood failure less than 25 % but higher than 5 %
4 sticking with wood failure less than 5 %. Little force needed to remove board.
4.5 sticking without wood failure, hanging board. No effort needed to remove board.
5 perfect release, the board releases spontaneously.

## Claims

1. A polyisocyanate composition used for binding lignocellulosic materials comprising a polyisocyanate prepolymer said prepolymer being the reaction product from a polyisocyanate and a polyol **characterised in that** the polyisocyanate composition has a free unreacted diisocyanate content of at least 8% by weight

2. A polyisocyanate composition according to claim 1 whereby at least 60% of the free unreacted diisocyanate content is 4,4'-diphenylmethane diisocyanate.

3. A polyisocyanate composition according to claim 2 whereby 70 to 86 % of the free unreacted diisocyanate content is 4,4'-diphenylmethane diisocyanate.

4. A polyisocyanate composition according to claims 1-3 wherein the polyol is a polyether polyol having from 2 to 8 hydroxyl groups wherein the polyether polyol comprises polymerized alkylene units containing at least 15% ethylene oxide units

5. A polyisocyanate composition according to claims 1-4 where said polyisocyanate further comprising a polyphenyl polymethylene polyisocyanate

6. A polyisocyanate composition according to claims 1-4 wherein said polyisocyanate composition further comprising a polyphenyl polymethylene polyisocyanate

7. A polyisocyanate composition according to claims 1-6 wherein the total polyisocyanate composition has an NCO content from 20 to about 30% .

8. A process for binding lignocellulosic material comprising the steps of
a) bringing lignocellulosic material into contact with a polyisocyanate composition according to claim 1 - 7
b) applying a paper overlay directly to the mat surfaces or a wax based release agent or metallic soap solution to the surfaces of the lignocellulosic composite or to the metal plates of the pressing equipment prior to the application of pressure to the mat surface in the pressing equipment if required
c) subsequently allowing said material to bind.

9. A process according to claim 8 in which the polyisocyanate composition of claim 1-6 is brought into contact with the lignocellulosic material and the combination thereby formed is hot-pressed between metal plates at a temperature in the range 100° C to 250° C and a specific pressure in the range 1 to 8 Mpa to yield a composite with density between 500kgm³ and 900kgm³.

10. A process according to claim 9 in which the polyisocyanate composition of claim 1-6 is brought into contact with the lignocellulosic material and the combination thereby formed is hot-pressed between metal plates at a temperature in the range 150° C to 200° C and a specific pressure in the range 2 to 6 Mpa to yield a composite with density between 590kgm³ and 750kgm³.

11. A process according to claim 8 in which the polyisocyanate composition of claim 1-6 is brought into contact with the lignocellulosic material and the combination thereby formed is hot-pressed between metal plates at a temperature in the range 100°C to 250°C and a specific pressure in the range 1 to 8 Mpa where the measured core temperature of the composite during pressing is from 80 to 130 ° C.

12. A process according to claim 8 wherein said combination is hot pressed.

13. A process according to claim 8-12 in which the polyisocyanate composition is applied in such an amount as to give a weight ratio of polyisocyanate composition to lignocellulosic material in the range 0.1: 99.9 to 20: 80.
